Europäisches Patentamt

European Patent Office

Office européen des brevets

(19)

(11) EP 0 727 440 B2

(12) NEUE EUROPÄISCHE PATENTSCHRIFT

(45) Veröffentlichungstag und Bekanntmachung des Hinweises auf die Entscheidung über den Einspruch:
26.11.2003 Patentblatt 2003/48

(45) Hinweis auf die Patenterteilung:
05.07.2000 Patentblatt 2000/27

(51) Int Cl.⁷: **C08B 37/16**

(21) Anmeldenummer: 96102245.6

(22) Anmeldetag: 15.02.1996

(54) **Verfahren zur Reinigung von wasserlöslichen Cyclodextrinderivaten**

Process for purifying water soluble cyclodextrin derivatives

Procédé de purification de dérivés de cyclodextrines solubles dans l'eau

(84) Benannte Vertragsstaaten:
**BE DE FR GB IT NL**

(30) Priorität: 16.02.1995 DE 19505263

(43) Veröffentlichungstag der Anmeldung:
21.08.1996 Patentblatt 1996/34

(73) Patentinhaber: **Consortium für elektrochemische Industrie GmbH**
**81379 München (DE)**

(72) Erfinder: **Reuscher, Helmut Dr.**
**84547 Emmerting (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
DE-A- 2 357 731      DE-A- 2 700 011
JP-A- 4 057 801      JP-A- 62 104 590
JP-A- 63 027 440     US-A- 5 221 485

• CHEMICAL ABSTRACTS, vol. 105, no. 8, 25.August 1986 Columbus, Ohio, US; abstract no. 62609a, HASHIMOTO HITOSHI ET AL.: "Industrial production of cyclodextrins" Seite 116; XP002002482 & DENPUN KAGAKU 1985 VOL. 32(4) 307-11,

• DATABASE WPI Week 9214 Derwent Publications Ltd., London, GB; AN 111446 XP002002483 & JP-A-04 057 801 (NIPPON SHOKUHIN KAK KK) , 25.Februar 1992
• DATABASE WPI Week 8725 Derwent Publications Ltd., London, GB; AN 173706 XP002002484 & JP-A-62 104 590 (ENSUIKO SEITO KK) , 15.Mai 1987
• Chemical Engineers Handbook, Band 5 (1973) S. 17-40 bis 17-43;
• Carbohydrate Research, Band 192 (1989), S. 283-289.
• Ullmann s Encyclopedia of Industrial Chemistry, 5. Auflage, Band A16 S. 187-202
• Szejtli, J., "Cyclodextrin Technology" 1988, S. 1, Kluwer Academic Publishers
• Encyclopédie, "Techniques de l'ingenieur, traité génie et procédés chimiques", 12/1989, Seiten J2796: 1,2,14-16, J2797: 1-14, J2798: 1-2
• Handbook of Industrial Membrane Technology, M.C. Porter(ed.), Noyes Publication, 1990. S. v-ix
• Millipore Corp. US, Technische Notiz, "Helicon-RO Cartridges with Nanomax Membrane" 1/1994

Bemerkungen:
Die Akte enthält technische Angaben, die nach dem Eingang der Anmeldung eingereicht wurden und die nicht in dieser Patentschrift enthalten sind.

EP 0 727 440 B2

**Beschreibung**

Die Erfindung betrifft Verfahren zur Reinigung von wasserlöslichen Cyclodextrinderivaten.

Bisher werden zur Reinigung von wasserlöslichen Cyclodextrinderivaten die Umkristallisation, die Ionenaustauschchromatographie, Fällungsmethoden, Extraktionsverfahren, Dialyse und die Ultrafiltration eingesetzt. Diese Verfahren sind beispielsweise in den folgenden Literaturstellen beschrieben:

In HU 202889 wird β-Cyclodextrin ( β-CD) in wässriger Natronlauge mit Propylenoxid zu Hydroxypropyl-β-Cyclodextrin umgesetzt. Die Abtrennung des entstehenden Natriumchlorids und des Propylenglykols erfolgt durch Ionenaustausch und Fällung des hydroxypropylierten β-Cyclodextrins in großen Mengen von Aceton, Filtration, Aufnahme des Filterkuchens in Wasser, Destillation und schließlich Sprühtrocknung. Bei einer Ausbeute um 90% wird ein Salzbzw. Propylenglykolgehalt von 0,1% erreicht.

In CA 117:10196s wird die Reinigung des gleichen Produktes durch fraktionierte Chromatographie der wässrigen Cyclodextrinlösung über einen Kationenaustauscher beschrieben. Dieses Verfahren liefert in 16%ige Ausbeute ein'Produkt mit einem Propylenglykolgehalt von 0,05%.

In US 4870060 wird das nach Methylierung/Hydroxypropylierung von c-Cyclodextrin in wässriger Natronlauge als Nebenprodukt erhaltene Natriumchlorid über Ionenaustauschchromatographie entfernt.

In CA98(20):162747z wird die Abtrennung von anorganischen Salzen von methylierten Cyclodextrinen durch Extraktion der Methylcyclodextrine mit organischen Lösungsmittel wie Methylenchlorid, Chloroform oder Ethylacetat beschrieben.

In CA 119:70467 wird die Abtrennung von PEG (Polyethylenglykol) 6000 aus einer Reaktionsmischung von Maltosyl-β-Cyclodextrin durch Ultrafiltration (UF) beschrieben.

In US 3,453,257 wird Glycidyltrimethylammonium- β-Cyclodextrin mit Methanol gewaschen und in Aceton gefällt.

In US 5,134,127 wird ein Sulfobutylether von β-CD über Ionenaustauscher und Dialyse gereinigt Die Aufkonzentrierung erfolgt über Ultrafiltration.

In WO 90/12035 wird (S)-Hydroxypropyl-β-CD über Dialyse gereinigt.

CA 113: 189816 beschreibt die kontinuierliche Abtrennung von branched CD aus einer Reaktionsmischung durch eine UF-Membran.

CA 105: 81066 beschreibt die Fraktionierung von Cyclodextrinen oder anderen Dextrinen durch Ultrafiltration.

CA 118: 127572 beschreibt die Abtrennung von CD-Komplexen über eine UF-Membran.

WPI/Derwent 92-111446 [14] & JP-A-4057801 offenbart ein Verfahren zur Reinigung von Hydroxyalkyl-Cyclodextrin durch Chromatographie zur Entfernung von Glykolen. Vor oder nach diesem Trennverfahren kann zusätzlich eine reverse Osmose durchgeführt werden.

Chemical Abstracts Band 105, 1986, Zusammenfassung Nummer 62609a offenbart das Aufkonzentrieren von Cyclodextrin. Das genannte Verfahren ist zum Aufreinigen von Cyclodextrin ungeeignet, da es zum Konzentrieren einer Lösung zur Produktion von CD aus Kartoffelstärke mittels CGTase eingesetzt wird. Eine solche Lösung enthält neben dem CD auch immer die CGTase. Diese CGTase läßt sich aufgrund ihrer Größe nicht aus dem Reaktionsansatz mittels RO entfernen.

DE-A-2700011 beschreibt ein Verfahren zur Herstellung von Hydroxyalkylstärke. Hydroxyalkylstärke ist ein Polymer mit hohem Molekulargewicht, das deshalb im Gegensatz zu CD-Derivaten eine RO-Membran nicht passieren kann.

Die Erfindung betrifft ein wobei die Reinigung einstufig kostengünstiges, universell einsetzbares Verfahren zur Reinigung von wasserlöslichen Cyclodextrinderivaten mittels reverser Osmose (RO) unter Verwendung mindestens einer hydrophilen, asymmetrischen Lösungs-Diffusionsmembran mit einer nominalen Molekulargewichts-trenngrenze von 250-700 D erfolgt.

Bevorzugt geeignet sind Membranen mit einer nominalen Molekulargewichtstrenngrenze von 350 - 500 D. Solche Membranen werden z.B. von den Firmen Millipore GmbH, Eschborn, Deutschland und Berghof Laborprodukte GmbH, Eningen u. A., Deutschland angeboten.

Je nach Membrantyp kann die reverse Osmose in Wasser oder in wässrigen Lösungsmitteln, z.B. in Mischungen von Wasser insbesondere mit Mono- und/oder Oligo-Alkoholen (z.B. Methanol, Ethanol, Isopropanol, Butanol, Glycerin, Ethylenglykol) durchgeführt werden.

Überraschend wurde gefunden, daß bei einer Reinigung von Cyclodextrinderivaten mittels des erfindungsgemäßen Verfahrens Cyclodextrinderivate von der Membran zurückgehalten werden, während anorganische Salze, org. Lösungsmittelreste oder kleinere organische Moleküle bis ca. 350 D die Membran ungehindert passieren können. Dadurch ist eine Reinigung von Cyclodextrinderivaten mit dem erfindungsgemäßen Verfahren im Gegensatz zur Ultrafiltration in nur einer Stufe bei einem verschwindend geringen Produktverlust möglich.

Das erfindungsgemäße Verfahren ist daher insbesondere auch für die Abtrennung von anorganischen Salzen, kleineren organischen Molekülen oder organischen Lösungsmittelresten von Cyclodextrinderivaten geeignet

Das erfindungsgemäße Verfahren ist nicht aufwendig, es ermöglicht bei geringen Betriebskosten eine verbesserte Produktqualität und höhere Produktausbeuten. Das erfindungsgemäße Verfahren ist damit sehr wirtschaftlich.

Der Vorteil des erfindungsgemäßen Verfahrens gegenüber den Reinigungsverfahren aus dem Stand der Technik läßt sich exemplarisch an der Aufreinigung von Hydroxypropyl- β-Cyclodextrin belegen. In HU 202889 wird dieses Derivat sehr aufwendig durch Fällung in Aceton gereinigt, in CA 117:10196s erfolgt die Reinigung über Ionenaustauschchromatographie mit sehr geringen Ausbeuten.

Demgegenüber ist es mittels des erfindungsgemäßen Verfahrens möglich, dieses Derivat in einem Schritt sowohl vom vorhandenen Kochsalz zu trennen wie auch das ungeladene Propylenglykol bis hin zu einer Reinheit von weit unter 0,1% (g/g) abzutrennen (siehe Beispiel 11).

Durch den niedrigen Produktverlustim erfindungsgemäßen Verfahren ist eine mehrstufige Modulschaltung nicht nötig. Dies ist ein Vorteil gegenüber einer Aufreinigung von Cyclodextrinderivaten mittels Ultrafiltrationsverfahren, da bei Ultrafiltrationsverfahren bei hohen Produktverlusten eine aufwendige und kostenträchtige mehrstufige Modulschaltung (Kaskadenanordnung) notwendig wird.

Durch das erfindungsgemäße Verfahren der reversen Osmose wird mit einer geeigneten Membran eine vollständige Reinigung in nur einer Stufe erreicht (siehe z.B. Beispiele 8, 9 und 11). Dadurch ist dies Verfahren wesentlich wirtschaftlicher als alle bekannten Verfahren. Die Produktverluste liegen bei der erfindungsgemäßen Reinigungsmethode bei bestimmten Membranen unter 0,3% pro Vo (siehe Beispiele 1, 4, 5, und 11).

Für das erfindungsgemäße Reinigungsverfahren können beliebige reverse Osmose-Anlagen eingesetzt werden.

Vorteilhafterweise werden handelsübliche reverse Osmose-Anlagen eingesetzt, wobei besonders bevorzugt Anlagen mit spiralförmig gewickelten Membranmodulen verwendet werden.

Beispiele für solche Anlagen sind das Remolino-System (Rührzelle) der Fa. Millipore, das PRO-Lab-System der Fa. Millipore oder das Millipore Tangentialfluß-Filtrationssystem MSP006256 für max. 2 spiralförmig gewickelte Umkehrosmosemodule.

Die Parameter zur Durchführung des erfindungsgemäßen Verfahrens sind im wesentlichen Anlage- bzw. Membranbedingt

Das aufzureinigende Cyclodextrinderivat wird vorzugsweise als 5-60 Gew.-%ige Lösung, besonders bevorzugt als 20-40% wässrige Lösung eingesetzt (Gewichtsprozent bezogen auf das reine CD-Derivat).

Je nach Membrantyp kann in Wasser oder auch in wässrigen Lösungsmitteln, z.B. in Mischungen von Wasser insbesondere mit Mono- und/oder Oligo-Alkoholen (z.B. Methanol, Ethanol, Isopropanol, Butanol, Glycerin, Ethylenglykol) gearbeitet werden.

Das Verfahren wird je nach eingesetzter Membran bei einem Transmembrandruck von 15-70 bar, bevorzugt 30-40 bar und einer Temperatur von 20-80°C, bevorzugt 20-50°C durchgeführt. Auch der jeweils optimale pH Wert ist abhängig von der jeweils eingesetzten Membran. Er liegt zwischen pH 2 und pH 11, bevorzugt in einem pH Bereich von 6 bis 8.

Das erfindungsgemäße Verfahren istzur Reinigung von monomeren Cyclodextrinderivaten auf technische bis Pharmaqualität geeignet. Dabei erfolgt eine Abtrennung von anorganischen Salzen wie z.B. NaCl, KCl, $Na_2CO_3$, organischen Molekülen wie z.B. Gykolsäure, Glykolen, besonders mono- und di-Propylenglykolen, Essigsäure, Natriumacetat, 1,2-Dihydroxypropyl-3-trimethylammoniumchlorid, 2-Chlor-4,6-dihydroxy-1,3,5-triazin (Mononatriumsalz) und Lösungsmittelresten wie z.B. DMF, DMSO, Dioxan, THF, Methylethylketon, Aceton, Methanol, Ethanol, Isopropanol, Butanol, Glycerin, Ethylenglykol.

Das sich während des Verfahrens verringernde Retentatvolumen kann mittels Zugabe des wässrigen Lösungsmittels wie jeweils erwünscht konstant oder variabel gehalten werden! Die Lösungsmittelzugabe kann kontinuierlich oder diskontinuierlich erfolgen.

Das erfindungsgemäße Verfahren ermöglicht somit einerseits die Abtrennung sowohl von geladenen (Salzen) wie auch von ungeladenen Molekülen, beispielsweise Nebenprodukten der CD-Derivat Herstellung oder Lösungsmittelresten, sowie andererseits auch eine schonende Aufkonzentrierung von wässrigen CD-Derivate-Lösungen.

Ein bekanntes Verfahren zur Aufkonzentrierung von Cyclodextrinderivatlösungen ist die Destillation, diese ist nicht schonend.

Das erfindungsgemäße Verfahren verbilligt zudem die Sprühtrocknung von Cyclodextrinderivaten, da es kostengünstiger ist, eine konzentrierte wässrige Lösung sprühzutrocknen.

Bei der Aufkonzentrierung mittels des erfindungsgemäßen Verfahrens wird lediglich eine verringerte Menge oder kein Lösungsmittel, in der Regel Wasser, während der reversen Osmose zum Retentatzugegeben. Da das Filtrat (Permeat) abfließt, wird das Retentat (die CD-Lösung) zwangsläufig aufkonzentriert Die übrigen Verfahrensparameter sind die gleichen wie bei den beschriebenen Reinigungsverfahren.

Die folgenden Beispiele dienen der weiteren Erläuterung der Erfindung.

Alle Angaben in den Beispielen sind in Gewichtsprozent Die Angaben der Verunreinigungen sind immer auf das Trockengewicht bezogen.

In den Beispielen wurden folgende Membransysteme unter den genannten Druckverhältnissen verwendet:

Definition:

$$TMP = ((P_{Eingang} + P_{Ausgang})/2)-P_{Permeat})$$

TMP = mittlerer Transmembrandruck
$P_{Eingang}$ = Druck des Retentats vor dem Membranmodul
$P_{Ausgang}$ = Druck des Retentats nach dem Membranmodul
$P_{Permeat}$ = Druck des Permeats (in der Regel $P_{Perm}$ = 0)
Vo = Waschvolumen (1 Vo bei 100 l einer zu reinigenden CD-Derivat-Lösung entspricht 100 l).

A) reverse-Osmose-System: Remolino-System (Rührzelle) der Fa. Millipore Druck: 15-40 bar, bevorzugt 35-40 bar

| Firma | Membran | Trenngrenze | Material | Durchmesser |
|---|---|---|---|---|
| Berghof | BM 5 | 500 NMGT | Polyamid | 76 mm |
| Millipore | R 75 A | 400 NMGT | Polyamid | 76 mm |
| Millipore | R 76 A | 400 NMGT | Polyamid | 76 mm |
| Millipore | Nanomax 50 | 350 NMGT | Polyamid | 76 mm |
| NMGT = nominelle Molekulargewichts-Trenngrenze | | | | |

B) reverse-Osmose-System:

PRO-Lab-System der Fa. Millipore
Druck: 15-40 bar TMP, bevorzugt 35-40 bar TMP

| Firma | Membran | Trenngrenze | Material | Filterfläche |
|---|---|---|---|---|
| Millipore | R 75 A | 400 NMGT | Polyamid | 0,3 m$^2$ |

C) reverse-Osmose-System: Millipore Tangentialfluß-Filtrationssystem MSP006256 für max. 2 spiralförmig gewikkelte Umkehrosmosemodule mit je ca. 5 m$^2$- Membranfläche Druck: 15-40 bar TMP, bevorzugt 35-40 bar TMP

| Firma | Membran | Trenngrenze | Material | Fitterfläche |
|---|---|---|---|---|
| Millipore | R 76 A | 400 NMGT | Polyamid | 5,1 m$^2$ |
| Millipore | Nanomax 50 | 350 NMGT | Polyamid | 5,76 m$^2$ |

Beispiel 1: Entfernung von Natriumchlorid aus Methyl-β-Cyclodextrin DS 1,8

Anlage:

Millipore Tangentialfluß-Filtrationssystem MSP006256 mit einem spiralförmig gewickelten Umkehrosmosemodul R 76 A mit 5,1 m$^2$- Membranfläche

Vorschrift:

Reverse Osmose von 160 l einer 15% Lösung von Methyl-β-Cyclodextrin DS 1,8 in Wasser bei 40 bar TMP, pH = 7 und 31 °C bei konstantem Retentatvolumen. Der Salzgehalt wurde durch Titration bestimmt. Zur Ermittlung des CD-Verlustes wurde eine bestimmte Menge des Filtrats gefriergetrocknet und ausgewogen. Von diesem Rückstand wurde der Salzgehalt bestimmt. Die Differenz zwischen Auswaage und Salzgehalt ergab den CD-Verlust.
Tab. 1 gibt den zeitlichen Verlauf der Aufreinigung und den auftretenden Produktverlust wieder.

Tab.1

| Zeit [h] | Vo | Salzgehalt [%] | CD-Verlust [%] |
|---|---|---|---|
| 0 | 0 | 18,4 | 0 |
| 2 | 2 | 1,65 | 0,31 |
| 4 | 4 | 0,23 | 0,58 |
| 6 | 6 | 0,049 | 1,15 |

Der Produktverlust betrug in diesem Versuch 0,19% pro Vo.

Beispiel 2: Entfernung von Natriumchlorid aus Methyl-β-Cyclodextrin DS 1,8

Anlage:

Remolino-System der Fa. Millipore mit einer Membranscheibe BM5 der Fa. Berghof mit 76 mm Durchmesser

Vorschrift:

Reverse Osmose von 150 ml einer 20% Lösung von Methyl-β-Cyclodextrin DS 1,8 in Wasser bei 40 bar, pH=7 und Raumtemperatur. Nach jeweils 50 ml Permeat wurde die reverse Osmose unterbrochen und das Retentat auf 150 ml Volumen wieder aufgefüllt. Der Salzgehalt wurde durch Titration bestimmt.
Tab. 2 gibt den Verlauf der Aufreinigung wieder.

Tab. 2

| Vo | Salzgehalt [%] |
|---|---|
| 0 | 15 |
| 1 | 5,6 |
| 2 | 3,0 |
| 3 | 1,53 |
| 4 | 0,82 |

Beispiel 3: Entfernung von Natriumchlorid aus Methyl-β-Cyclodextrin DS 1,8

Anlage:

Millipore Tangentialfluß-Filtrationssystem MSP006256 mit einem spiralförmig gewickelten umkehrosmosemodul Nanomax 50 mit 5,76 m$^2$-Membranfläche

Vorschrift:

Reverse Osmose von 66 l einer 35% Lösung von Methyl-β-Cyclodextrin DS 1,8 in Wasser bei 40 bar TMP, pH = 7 und 45-48°C bei konstantem Volumen mit anschließender Aufkonzentrierung. Der Salzgehalt wurde durch Titration bestimmt. Zur Ermittlung des CD-Verlustes wurde eine bestimmte Menge des Filtrats gefriergetrocknet und ausgewogen. Von diesem Rückstand wurde der Salzgehalt bestimmt. Die Differenz zwischen Auswaage und Salzgehalt ergab den CD-Verlust.
Tab. 3 gibt den zeitlichen Verlauf der Aufreinigung und die Konzentration der Cyclodextrinderivatlösung wieder.

Tab.3

| Zeit [h] [min] | Vo | Salzgehalt [%] | CD-Gehalt der Lösung |
|---|---|---|---|
| 0 | 0 | 15,14 | 35 |
| 12 | 0,25 | 10,57 | 35 |
| 23 | 0,5 | 7,39 | 35 |
| 31 | 0,75 | 5,17 | 35 |

Tab.3   (fortgesetzt)

| Zeit [h] [min] | Vo | Salzgehalt [%] | CD-Gehalt der Lösung |
|---|---|---|---|
| 39 | 1 | 3, 56 | 35 |
| 49 | 1,25 | 2,52 | 42,5 |
| 54 | 1,50 | 0,96 | 50 |

Beispiel 4: Entfernung von Natriumchlorid aus Methyl-β-Cyclodextrin DS 0,6

Anlage:

Millipore Tangentialfluß-Filtrationssystem MSP006256 mit einem spiralförmig gewickelten Umkehrosmosemodul R 76 A mit 5,1 m$^2$- Membranfläche

Vorschrift:

Reverse Osmose von 200 l einer 16% Lösung von Methyl-β-Cyclodextrin DS 0,6 in Wasser bei 40 bar TMP, pH =7 und 35°C bei konstantem Volumen. Der Salzgehalt wurde durch Titration bestimmt. Zur Ermittlung des CD-Verlustes wurde eine bestimmte Menge des Filtrats gefriergetrocknet und ausgewogen. Von diesem Rückstand wurde der Salzgehalt bestimmt. Die Differenz zwischen Auswaage und Salzgehalt ergab den CD-Verlust.
Tab. 4 gibt den zeitlichen Verlauf der Aufreinigung und den auftretenden Produktverlust wieder.

Tab.4

| Zeit [h] | Vo | Salzgehalt [%] | CD-Verlust [%] |
|---|---|---|---|
| 0 | 0 | 16,13 | 0 |
| 4,4 | 3 | 0,13 | 0,75 |
| 7,1 | 5 | 0,033 | 1 |

Der Produktverlust betrug in diesem Versuch 0,2% pro Vo

Beispiel 5: Entfernung von Natriumchlorid aus Methyl-γ-Cyclodextrin DS 0,6

Anlage:

Millipore Tangentialfluß-Filtrationssystem MSP006256 mit einem spiralförmig gewickelten Umkehrosmosemodul R 76 A mit 5,1 m$^2$- Membranfläche

Vorschrift:

Reverse Osmose von 190 l einer 19% Lösung von Methyl-γ-cyclodextrin DS 0,6 in Wasser bei 40 bar TMP, pH =7 und 39°C bei konstanten Volumen. Der Salzgehalt wurde durch Titration bestimmt. Zur Ermittlung des CD-Verlustes wurde eine bestimmte Menge des Filtrats gefriergetrocknet und ausgewogen.
Von diesem Rückstand wurde der Salzgehalt bestimmt. Die Differenz zwischen Auswaage und Salzgehalt ergab den CD-Verlust.
Tab. 5 gibt den zeitlichen Verlauf der Aufreinigung und den auftretenden Produktverlust wieder.

Tab.5

| Zeit [h] | Vo [%] | Salzgehalt [%] | CD-Verlust |
|---|---|---|---|
| 0 | 0 | 15,49 | 0 |
| 4,75 | 2 | 0,48 | 0,55 |
| 9,5 | 4 | 0,049 | 1,07 |
| 13 | 5,5 | 0,016 | 1,27 |

Der Produktverlust betrug in diesem Versuch 0,23% pro Vo.

Beispiel 6: Entfernung von Natriumacetat und Essigsäure aus Acetyl-β-Cyclodextrin DS 1,0

Anlage:

Millipore Tangentialfluß-Filtrationssystem MSP006256 mit einem spiralförmig gewickelten Umkehrosmosemodul R76 A mit 5,1 m$^2$ Membranfläche.

Vorschrift:

Reverse Osmose von 100 l einer 25% Lösung von Acetyl-β-Cyclodextrin DS 1,0 in Wasser bei 40 bar TMP, pH=7 und 33°C bei konstantem Volumen. Der Acetatgehalt wurde enzymatisch bestimmt (Boehringer Mannheim kit. Nr. 148 261).
Tab. 6 gibt den Verlauf der Aufreinigung wieder.

Tab. 6

| Vo | Acetatgehalt [%] |
|----|------------------|
| 0  | 17,50            |
| 1  | 9,27             |
| 2  | 4,61             |
| 3  | 1,45             |
| 4  | 0,62             |
| 5  | 0,32             |
| 6  | 0,09             |
| 7  | 0, 05            |
| 8  | 0,01             |
| 9  | <0,01            |

Beispiel 7: Entfernung von Dimethylformamid aus branched β-Cyclodextrin

Anlage:

Millipore Tangentialfluß-Filtrationssystem Pro-Lab mit einem spiralförmig gewickelten Umkehrosmosemodul R75A mit 0,3 m$^2$ Membranfläche

Vorschrift:

Reverse Osmose von 2,7 l einer 20% Lösung von branched-β-Cyclodextrin in Wasser bei 40 bar TMP, pH = 7 und 30°C bei konstantem Volumen. Der Gehalt an Dimethylformamid wurde durch $^1$H-NMR einer gefriergetrockneten Probe bestimmt.
Tab. 7 gibt den Verlauf der Aufreinigung wieder.

Tab. 7

| Vo   | DMF-Gehalt [%] |
|------|----------------|
| 0    | 2,63           |
| 1    | 0,91           |
| 2,11 | 0,54           |
| 3,19 | 0,18           |
| 4,2  | 0,13           |

Vergleichsbeispiel 1: Entfernung von Natriumchlorid aus Carboxymethyl-β-Cyclodextrin DS 0,6

Anlage:

Ultrafiltrations-System Pellicon der Fa. Millipore mit einem Plattenmodul SK1 P714A0 mit 0,465 m$^2$ Membranfläche und 1000 D NMGT.

Vorschrift:

Ultrafiltration von 2000 ml einer 10% Lösung von Carboxymethyl-β-Cyclodextrin DS 0,6 in Wasser bei 2 bar TMP, pH = 7 und 25°C bei konstantem Volumen. In diesem Versuch wurde von bereits gereinigtem Carboxymethyl-β-CD DS 0,6 ohne Glycolsäure ausgegangen, das mit Natriumchlorid versetzt wurde. Der Salzgehalt wurde durch Titration bestimmt. Zur Ermittlung des CD-Verlustes wurde eine bestimmte Menge des Filtrats gefriergetrocknet und ausgewogen. Von diesem Rückstand wurde der Salzgehalt bestimmt. Die Differenz zwischen Auswaage und Salzgehalt ergab den CD-Verlust.

Tab. 8 gibt den Verlauf der Aufreinigung wieder.

Tab. 8

| Vo | Salzgehalt [%] | CD-Verlust [%] |
|----|----------------|----------------|
| 0 | 13,72 | 0 |
| 0,6 | 9,43 | 13,15 |
| 1,2 | 6,13 | 24,78 |
| 1,8 | 1,73 | 33,72 |

Der Produktverlust betrug in diesem Versuch 18,7% pro Vo.

Beispiel 8: Entfernung von Natriumchlorid und Glykolsäure aus Carboxymethyl-β-Cyclodextrin DS 0,6

Anlage:

Remolino-System der Fa. Millipore mit einer Membranscheibe R 76 A mit 76 mm Durchmesser.

Vorsch rift:

Reverse Osmose von 150 ml einer 20% Lösung von Carboxymethyl-β-Cyclodextrin DS 0,6 in Wasser bei 40 bar, pH = 7 und Raumtemperatur. Nach jeweils 60 ml Permeat wurde die reverse Osmose unterbrochen und das Retentat auf 150 ml Volumen wieder aufgefüllt. Der Salzgehalt wurde durch Titration bestimmt. Der Gehalt an Glykolsäure im CD-Derivat wurde berechnet. Die Abnahme des Gehaltes an Glykolsäure wurde über $^1$H-NMR bestimmt.

Tab. 9 gibt den Verlauf der Aufreinigung wieder.

Tab. 9

| Vo | Glykolsäure [%] | Salzgehalt [%] |
|----|-----------------|----------------|
| 0 | 3,99 | 15,3 |
| 0,4 | 2,88 | 8,44 |
| 0,8 | 2,28 | 4,36 |
| 1,2 | 1,63 | 1,78 |
| 1,6 | 1,15 | 1,01 |
| 2 | 0,69 | 0,57 |
| 2,4 | 0,49 | 0,56 |

Beispiel 9: Entfernung von Natriumchlorid und Glykolsäure aus Carboxymethyl-β-Cyclodextrin DS 0,6

Anlage: Millipore Tangentialfluß-Filtrationssystem MSP006256 mit einem spiralförmig gewickelten Umkehrosmosemodul Nanomax 50 mit 5,76 m$^2$-Membranfläche

Vorschrift:

Reverse Osmose von 100 l einer 25% Lösung von Carboxymethyl-β-Cyclodextrin DS 0,6 in Wasser bei 40 bar TMP, pH =7 und 34°C bei konstantem Volumen. Der Salzgehalt wurde durch Titration bestimmt. Der Gehalt an Glykolsäure im CD-Derivat wurde berechnet. Die Abnahme des Gehaltes an Glykolsäure wurde über 1 H-NMR bestimmt.

Tab. 10 gibt den Verlauf der Aufreinigung wieder

Tab. 10

| Vo | Glykolsäure [%] | Salzgehalt [%] |
|---|---|---|
| 0 | 2,69 | 14,80 |
| 1 | 1,11 | 2,61 |
| 2 | 0,19 | 0,13 |
| 3 | 0,03 | 0,01 |

Beispiel 10: Entfernung von Natriumchlorid und 1,2-Dihydroxypropyl-3-trimethylammoniumchlorid aus Glycidyl-trimethylammonium-β-Cyclodextrin MS 0,5

Anlage:

Remolino-System der Fa. Millipore mit einer Membranscheibe Nanomax 50 mit 76 mm Durchmesser.

Reverse Osmose von 150 ml einer 25% Lösung von Glycidylmethylammonium-β-Cyclodextrin DS 0,5 in Wasser bei 40 bar, pH = 7 und Raumtemperatur. Nach jeweils 60 ml Permeat wurde die reverse Osmose unterbrochen und das Retentat auf 150 ml Volumen wieder aufgefüllt. Der Gehalt an 1,2-Dihydroxypropyl-3-trimethylammoniumchlorid (Diol) im CD-Derivat wurde berechnet. Die Abnahme des Gehaltes an 1,2- Dihydroxypropyl-3-trimethylammoniumchlorid wurde über $^1$H-NMR bestimmt.

Tab. 11 gibt den Verlauf der Aufreinigung wieder.

Tab. 11

| Vo | Diol [%] |
|---|---|
| 0 | 8,26 |
| 0,4 | 6,00 |
| 0,8 | 6,00 |
| 1,2 | 5,66 |
| 2 | 4,15 |
| 2,8 | 3,78 |
| 3,6 | 3,12 |
| 5,2 | 3,12 |
| 6,8 | 2,83 |
| 8 | 2,17 |

Beispiel 11: Entfernung von Natriumchlorid sowie Mono- und Diglykol aus Hydroxypropyl-β-Cyclodextrin MS 0,9

Anlage:

Millipore Tangentialfluß-Filtrationssystem MSP006256 mit einem spiralförmig gewickelten Umkehrosmosemodul R 76 A mit 5,1 $m^2$- Membranfläche

Vorschrift:

Reverse Osmose von 190 l einer 30% Lösung von Hydroxypropyl-β-Cyclodextrin MS 0,9 in Wasser bei 40 bar TMP, pH = 7 und 33°C bei konstantem Volumen. Der Salzgehalt wurde durch Titration bestimmt. Zur Ermittlung des CD-Verlustes wurde eine bestimmte Menge des Filtrats gefriergetrocknet und ausgewogen. Von diesem Rückstand wurde der Salz- und der Glycolgehalt bestimmt. Die Differenz zwischen Auswaage und Salz-, Glycolgehalt ergab den CD-Verlust. Die Bestimmung des Glykolgehaltes erfolgte gaschromatographisch-nach Extraktion einer gefriergetrockneten Probe mit Aceton.

Tab. 12 gibt den Verlauf der Aufreinigung und den auftretenden Produktverlust wieder.

Tab. 12

| Vo | Monoglykol [%] | Diglykol [%] | Salzgehalt [%] | CD-Verlust |
|---|---|---|---|---|
| 0 | 3,84 | 0,27 | 3,44 | 0 |
| 1 | 0,831 | 0,115 | 0,33 | 0,84 |

Tab. 12   (fortgesetzt)

| Vo | Monoglykol [%] | Diglykol [%] | Salzgehalt [%] | CD-Verlust |
|----|----------------|--------------|----------------|------------|
| 3 | 0,068 | 0,03 | 0,021 | 0,998 |
| 4 | 0 | 0 | 0,01 | 1,13 |

Der Produktverlust betrug in diesem Versuch 0,28% pro Vo

Beispiel 12: Permeatfluß einer 20% Hydroxypropyl-β-Cyclodextrinlösung MS 0,7 bei unterschiedlichem Transmembrandruck TMP und unterschiedlichem Retentatfluß VF

Anlage:

Millipore Tangentialfluß-Filtrationssystem MSP006256 mit einem spiralförmig gewickelten Umkehrosmosemodul R 76 A mit 5,1 m$^2$à- Membranfläche

Vorschrift

Reverse Osmose von 90 kg einer 20% Lösung von Hydroxypropyl- β-Cyclodextrin MS 0,7 in Wasser bei unterschiedlichem TMP, pH = 7 und 40°C bei konstanten Volumen. Es erfolgte keine Filtratabnahme, die Lösung wurde mit unterschiedlichem Retentatfluß VF im Kreis gefahren.

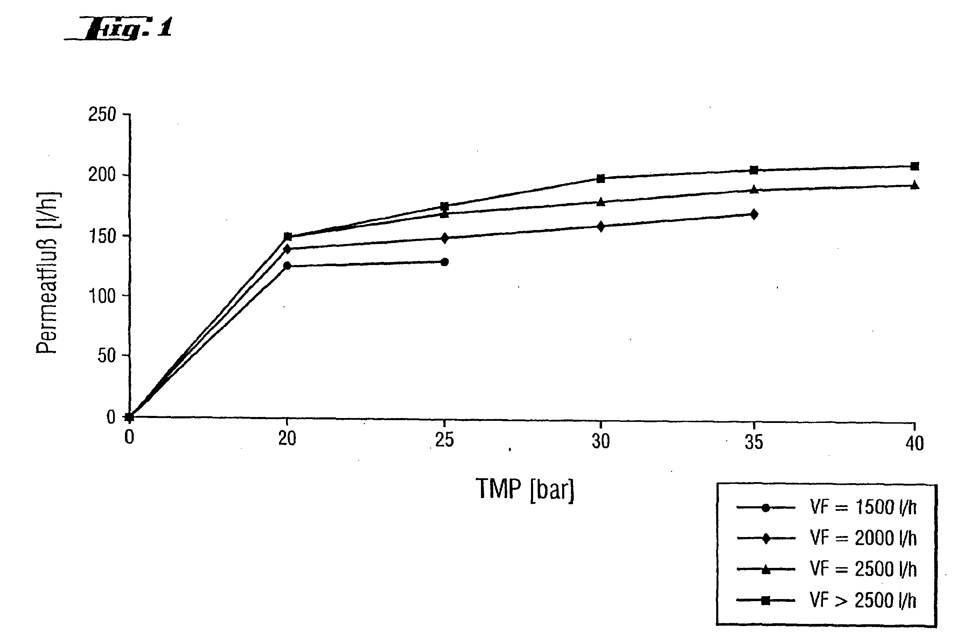

Fig. 1 zeigt den Permeatfluß einer 20% Lösung von Hydroxypropyl- β-Cyclodextrin MS 0,7 in Wasser bei unterschiedlichem TransmembrandruckTMP und unterschiedlichem Retentatfluß VF
Beispiel 13: Permeatfluß einer wäßrigen Hydroxypropyl- β-Cyclodextrinlösung MS 0,7 unterschiedlicher Konzentration bei unterschiedlichem TransmembrandruckTMP.

Anlage: .

Millipore Tangentialfluß-Filtrationssystem MSP006256 mit einem spiralförmig gewickelten Umkehrosmosemodul R 76 A mit 5,1 m$^2$à- Membranfläche

Vorschrift:

Reverse Osmose von 90 kg einer Lösung von Hydroxypropyl- β-Cyclodextrin MS 0,7 in Wasser unterschiedlicher Konzentration bei 20-40 bar TMP, pH =7 und 40°C bei konstantem Volumen. Es erfolgte keine Filtratabnahme; die Lösung wurde im Kreis gefahren.

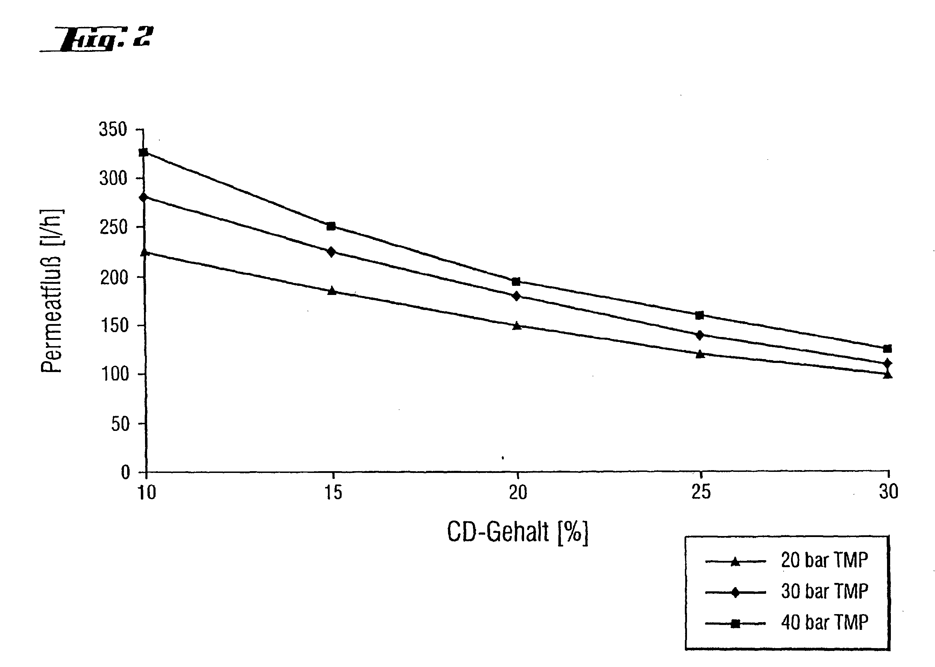

Fig. 2 zeigt den Permeatfluß einer Lösung von Hydroxypropyl- β-Cyclodextrin MS 0.7 in Wasser unterschiedlicher Konzentration und unterschiedlichem Transmembrandruck TMP.

**Patentansprüche**

**1.**   Verfahren zur Reinigung von wasserlöslichen Cyclodextrinderivaten, **dadurch gekennzeichnet, daß** die Reinigung einstufig mittels einer reversen Osmose (RO) bei einem Transmembrandruck von 15-70 bar unter Verwendung mindestens einer hydrophilen, asymmetrischen Lösungs-Diffusionsmembran mit einer nominalen Molekulargewichtstrenngrenze von 250 - 700 D erfolgt.

**2.**   Verfahren gemäß Anspruch 1, **dadurch gekennzeichnet, daß** Membranen mit ein er nominalen Molekularaewichtstrenngrenze von 350 - 500 D eingesetzt werden.

**3.**   Verfahren gemäß einem der Ansprüche 1 bis 2, **dadurch gekennzeichnet, daß** das aufzureinigende Cyclodextrinderivat als 5-60 Gew.-%ige Lösung eingesetzt wird.

**4.**   Verfahren gemäß einem oder mehreren der Ansprüche 1 bis 3, **dadurch gekennzeichnet, daß** es bei einem Transmembrandruck von 15-70 bar und einer Temperatur von 20-80°C durchgeführt wird.

**5.**   Verfahren gemäß einem oder mehreren der Ansprüche 1 bis 4, **dadurch gekennzeichnet, daß** es in einem pH Bereich zwischen pH 2 und pH 11 durchgeführt wird.

6. Verfahren gemäß einem oder mehreren der Ansprüche 1 bis 5, **dadurch gekennzeichnet, daß** spiralförmig gewickelte Membranmodule verwendet werden.

7. Verwendung einer hydrophilen, asymmetrischen Lösungs-Diffusionsrnebran mit einer nominalen Molekulargewichtstrenngrenze von 250 - 700 D zur einstufigen Reinigung wasserlöslicher Cyclodextrinderivate bei einem Transmembrandruck von 15 - 70 bar.

**Claims**

1. Process for the purification of water-soluble cyclodextrin derivatives, **characterized in that** the purification is performed in a single step by means of a reverse osmosis (RO) at a trans-membrane pressure of 15-70 bar using at least one hydrophilic, asymmetric solution-diffusion membrane with a nominal molecular weight cut-off of 250-700 D.

2. Process according to Claim 1, **characterized in that** the membranes employed have a nominal molecular weight cut-off of 350-500 D.

3. Process according to either of Claims 1 and 2, **characterized in that** the cyclodextrin derivative to be purified is employed as a 5-60% by weight solution.

4. Process according to one or more of Claims 1 to 3, **characterized in that** the trans membrane pressure in the process is 15-70 bar and the temperature is 20-80°C.

5. Process according to one or more of Claims 1 to 4, **characterized in that** the pH range of the process is between pH 2 and pH 11.

6. Process according to one or more of claims 1 to 5, **characterized in that** spirally wound membrane modules are used.

7. Use of a hydrophilic, asymmetric solution-diffusion membrane with a nominal molecular weight cut-off of 250-700 D for the single-step purification of water-soluble cyclodextrin derivatives at a trans membrane pressure of 15-70 bar.

**Revendications**

1. Procédé de purification de dérivés de cyclodextrine solubles dans l'eau, **caractérisé en ce** la purification est effectuée en une étape par osmose inverse (RO) sous une pression transmembranaire de 15 à 70 bars en utilisant au moins une membrane hydrophile asymétrique de diffusion de solution avec une limite nominale de séparation de poids moléculaire de 250-700 Daltons.

2. Procédé suivant la revendication 1, **caractérisé en ce qu'**on utilise des membranes avec une limite nominale de séparation de poids moléculaire de 350-500 Daltons.

3. Procédé suivant l'une des revendications 1 à 2, **caractérisé en ce que** le dérivé de cyclodextrine à purifier est utilisé sous forme d'une solution de 5 à 60% en poids.

4. Procédé suivant l'une ou plusieurs des revendications 1 à 3, **caractérisé en ce qu'**il est réalisé sous une pression transmembranaire de 15-70 bars et à une température de 20-80°C.

5. Procédé suivant l'une ou plusieurs des revendications 1 à 4, **caractérisé en ce qu'**il est réalisé dans un intervalle de pH de pH 2 à pH 11.

6. Procédé suivant l'une ou plusieurs des revendications 1 à 5, **caractérisé en ce qu'**on utilise des modules de membrane enroulés en spirale.

7. Utilisation d'une membrane hydrophile asymétrique de diffusion de solution avec une limite nominale de séparation de poids moléculaire de 250-700 Daltons pour la purification en une étape de dérivés de cyclodextrine solubles dans l'eau sous une pression transmembranaire de 15-70 bars.

**Fig. 1**

EP 0 727 440 B2

*Fig. 2*